# EUROPEAN PATENT APPLICATION

(11) **EP 3 291 529 A1**
(43) Date of publication of application: **07.03.2018**
(21) Application number: 16186943.3
(22) Date of filing: 02.09.2016
(51) Int. Cl.: H04N 5/225

(54) **CAMERA MODULE FOR A MOTOR VEHICLE AND METHOD FOR PRODUCING A CAMERA MODULE**

(71) Applicant: Autoliv Development AB, 447 83 Vårgårda (SE)
(72) Inventor: Fredriksson, Peter, 58422 Linköping (SE); Törnqvist, Filip, 59732 Åtvidaberg (SE)
(74) Representative: Müller Verweyen

(57) **Abstract**

The present invention relates to a camera module (1) for a motor vehicle, comprising a lens objective (4), a lens holder (3) holding said lens objective (4), and a back plate (2) connected to said lens holder (3) and holding an image sensor (9) in or close to an image plane (A) of the lens objective (4), wherein the lens holder (3) is fixed to the back plate (2) by a fused joint (8,10) or by an arrangement of several fused joints (8,10).

## Description

The invention relates to a camera module for a motor vehicle, comprising a lens objective, a lens holder holding said lens objective, and a back plate connected to said lens holder and holding an image sensor in or close to an image plane of the lens objective. The invention also relates to a method for producing a camera module comprising the features of the preambles of one of the claims 7 or 10.

In the assembly process of camera modules, the lens objective is usually aligned relative to the image sensor in order to compensate for manufacturing tolerances of the lens objective and tilt or misalignment of the image sensor, which would otherwise lead to a deterioration of the image quality. The aim of the alignment is to have the sensitive surface of the image sensor positioned in the image plane of the lens objective and to have the image centered on the image sensor. The alignment procedure usually involves adjusting five degrees of freedom, in particular bore sight correction (xy), tip-tilt or yaw-pitch adjustment (Θₓ, Θ_{y}) and focus adjustment (z), or six degrees of freedom, with additional roll adjustment (Θ_{z}), in particular for stereo configurations involving a plurality of cooperating camera modules.

A preferred alignment process called active alignment uses image data acquired by the image sensor of the camera during assembly as feedback for adaptively determining the optimum position of the lens objective relative to the image sensor. The lens objective is freely moved relative to the image sensor while simultaneously capturing images and thus determining the orientation of the lens objective that yields the best image quality. Once the optimal position and orientation of the lens objective has been determined, it is conventionally fixed relative to the image sensor by a glue joint between the lens objective and the front of the lens holder.

Although the optical axis approximately remains centered on the image sensor and bore sight errors are suppressed, a disadvantage of this concept is that changes of the glue due to temperature changes can result in significant shifts of the image plane. In the case of stereo systems this will lead to a violation of the stereo stability. Furthermore, since the lens objective is usually rotationally symmetrical around the optical axis, a roll angle displacement of the image sensor cannot be corrected by rotating the lens objective relative to the image sensor in the alignment process. Therefore, in a stereo system the roll alignment is performed by rotating one camera module around its optical axis during mounting of the camera modules into an external camera housing part, which is very laborious.

Also, in a stereo camera system it is required that the two cameras eyes have a coincident bore sight, with minimal change over temperature. The active alignment equipment would have to be modified significantly in order to handle both mono and stereo camera systems. It is desired to share common production processes as much as possible in order to gain efficiency and throughput, hence a modular approach for the camera eyes. It is also critical to maintain focus over the temperature envelope for any automotive camera.

DE 10 2010 047 106 A1 and WO 2011/131164 A1 respectively disclose a camera system where the lens objective is fixed relative to the image sensor by a glue joint between the lens objective and the lens holder.

The problem underlying the present invention is to provide a camera module which may be easy manufactured with a high accuracy of the adjustment of the lens holder to the back plate. Furthermore it is the object of the invention to provide a method for producing a generic camera module which enables an assembly of the camera module with an improved accuracy of the position of the lens holder to the back plate and with reduced manufacturing costs.

According to the invention it is suggested a camera module comprising the features of claim 1, a method for producing a camera module comprising the features of claim 6 and a method for producing a camera module comprising the features of claim 10. Further preferred embodiments of the invention are given in the subclaims, in the drawings and the related description.

According to the basic idea of the invention it is suggested that the lens holder is fixed relative to the back plate by a fused joint or by an arrangement of several fused joints. The suggested fused joint provides several advantages. The fused joint is realized by applying the joint material in fluidic form, which may therefore adapt to the individual position of the lens holder to the back plate. The joint is fixed in a second step by the solidification of the fluidic material. The lens holder may be therefore fixed in all possible positions in relation to the back plate without the risk that the adjusted position may be influenced or changed afterwards by the final fixation of the lens holder to the back plate. The fused joint is thermal solidifying so the material is applied hot and melted and then solidifying when the temperature is declining afterwards. Such a material can be for example metal or resin. Alternatively the fluidic material may be supplied in solid form as small particles for example in a carrier fluid. For example solder paste with small particles suspended in a viscous flux. These solid particles may be heated beyond the melting point (for example by direct conduction, hot air, infrared radiation or laser) and allowed to cool afterwards to solidify.

Furthermore it is suggested that the lens holder and the back plate are connected by the fused joint(s) in a section surrounding the image sensor. The lens holder and the back plate can be therefore connected by the fused joint connection with connection points or a connection line which encloses the image sensor. The connection can be therefore realized with equal distributed connection forces with respect to the image sensor.

The fused joint(s) is (are) preferably realized by a soldering connection, preferably by a tin soldering connection like for example used in the electric connection of PCB's. Soldering and especially tin soldering connections may be applied in a serial production process like for example known from the PCB's. Tin is solidifying very quickly and can be applied with a very high accuracy to predetermined points and in a predetermined distribution.

According to another preferred embodiment it is suggested that the back plate comprises at least one opening and the lens holder comprises at least one protrusion, wherein the protrusion extends through the opening and the fused joint(s) is

(are) realized by melting the protrusion(s) with a thickened head which comprises a dimension which is bigger than the cross section of the opening. The thickened head is arranged at the side facing away from the lens holder, so that the back plate is arranged between the lens holder and the thickened head. The protrusions may be designed as pins made of a thin wire which is connected to the lens holder and which extends with the free end through the opening. The pins are connected by the fuse joint realized by a soldering point at the free end, which comprises a thickness bigger that the opening, so that the thickened head prevents the release of the lens holder from the back plate.

According to a very easy embodiment the fused joint is realized by a ring of melted and afterwards solidified material which is arranged between the lens holder and the back plate. The material is applied in fluidic form with a high temperature and it solidifies when the temperature declines. Alternatively the fluidic material may be supplied in solid form as small particles for example in a carrier fluid like described above.

In this case the ring is preferably closed and encapsulates the image sensor. The ring acts in this case additionally to the connecting function also as a sealing encapsulating the cavity between the lens holder and the back plate in which the image sensor is arranged.

Further a method for producing a camera module for a motor vehicle, comprising the feature of the preamble of claim 1 with adjusting the lens holder with detecting pre-defined images and comparing the detected data with stored data in a processing unit, wherein the lens holder is fixed in the adjusted position by a solidification of a fluidic fused joint is proposed. The lens holder is adjusted when the detected data differing from the stored data in steps until the detected data are corresponding to the stored data, wherein the detected data may be deviate within predefined tolerances. The lens holder may be adjusted in several steps while the fluidic fused joint already starts to solidify. In this case the lens holder may be adjusted within a bigger range of positions when the fused joint is still fluidic having a low viscosity. In the following adjustment steps the lens holder is adjusted within smaller ranges in smaller steps while the viscosity of the fluidic fused joint is increasing because of the ongoing solidification with increasing attachment forces until the final complete fixation.

The fluidic fused joint is applied therefore preferably before or in an early phase of the adjustment of the lens holder and prefixes the lens holder in relation to the back plate and the lens holder is adjusted while the fused joint is solidifying.

Furthermore it is suggested a method for producing a camera module for a motor vehicle, comprising a lens objective, a lens holder holding said lens objective, and a back plate connected to said lens holder and holding an image sensor in or close to an image plane of the lens objective, with adjusting the lens holder to the back plate with detecting pre-defined images, comparing the detected data with stored data in a processing unit and adjusting the position of the lens holder when the detected data differing from the stored data, wherein between the lens holder and the back plate is provided a sealing and the lens holder is prefixed in a cleanroom by a provisional attachment to the back plate, and the adjustment of the lens holder to the back plate is performed outside the cleanroom.

In general the assembly and the adjustment of the camera module in the cleanroom are expensive and laborious. Furthermore the use of the cleanroom prolong the necessary time for the assembly. The suggested solution enables an adjustment of the lens holder outside of the cleanroom as the lens holder and the back plate are already connected by the provisional attachment with the seal arranged between, so that the cavity between the back plate and the lens holder in which the image sensor is arranged is sealed and protected hermetically versus the outside, so that the adjustment may be performed outside the cleanroom. The necessary time for the use of the cleanroom may be therefore reduced to the time to realize the provisional attachment. The seal and the image sensor may be attached before at the back plate or at the lens holder so that both parts need to be only attached in the cleanroom by the provisional attachment.

Furthermore the provisional attachment may be preferably a snap in connection, so that the attachment may be handled with a single attachment step without any additional tools or further attachment means. The snap in connection is realized in this case by providing hooks at one of the parts and corresponding attachment openings or recesses in the other part.

In this case the image sensor is encapsulated preferably by the sealing with respect to the environment so that the conditions of the cleanroom are maintained in the cavity between the lens holder and the back plate in which the image sensor is arranged.

The sealing may be realized by an elastic ring which may be compressed by the provisional attachment. Furthermore the sealing may be also realized by a foam.

In the following the invention shall be illustrated on the basis of preferred embodiments with reference to the accompanying drawings, wherein:
- Fig. 1: shows an inventive camera module according to a first embodiment; and
- Fig. 2: shows an inventive camera module according to a second embodiment; and
- Fig. 3: shows an inventive camera module with a provisional attachment of a lens holder to a back plate.

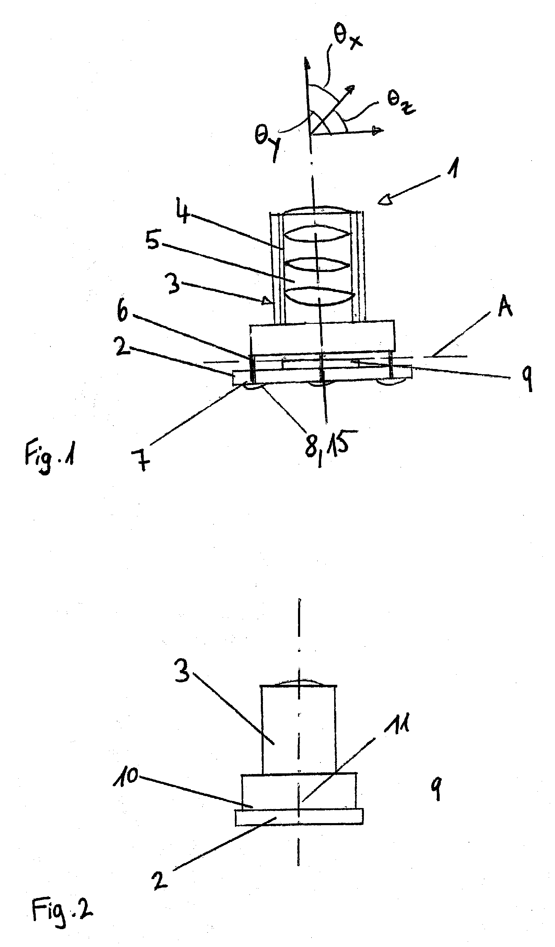

In Figure 1 it is shown a camera module 1 comprising as basic components a lens holder 3, a back plate 2 and a lens objective 4 fixed in the lens holder 2. The lens objective 4 comprises several single lenses 5 which are arranged preferably with a common optical axis. The back plate 2 serves further as a support for an image sensor 9. The lens holder 3 and the lens objective 4 need to be adjusted with respect to the back plate 2 and especially to the image sensor 9 arranged thereon and a plane A in a predefined position and orientation for a proper function and a high quality of the signal generated by the image sensor 9.

The lens holder 3 comprises further several protrusions 6 realized by metal pins preferably tin pins which extend through openings 7 in the back plate 2. The protrusions 6 may be manufactured as separated parts which are attached via inmoulding, stitching and adhesive or they may be also a part of the lens holder 3 as tin plated metal or plastic. The protrusions 6 may also be surface mounted. Furthermore the protrusions 6 may be also a part of the lens holder 3. The protrusions 6 are connected at their free ends, which are extending through the openings 7, with a fused joint 8 designed by tin soldering to thickened heads 15 which comprises a bigger dimension as the cross sections of the openings 7, so that the back plate 2 is hold between the thickened heads 15 or the fused joints 8 and the lens holder 3. The openings 7 are designed with respect to the cross-section of the protrusions 6 as oversized openings 7, so that the lens holder 3 may be still perform relative movements to the back plate 2.

The connection may be further realized by fusing the fused joint 8 with the surface of the back plate 2. The fused joint 8 is applied preferably before the adjustment or in an early phase of the adjustment so that the fused joint 8 is still fluidic when the adjustment of the lens holder 3 starts. The lens holder 3 may be therefore adjusted and fixed in all positions versus the back plate 2 within a predetermined range because of the flexible geometry of the fused joint 8 at the beginning of the adjustment. The connection is continuously consolidated with the ongoing solidification process of the fused joint 8 which is advantageous as the lens holder 3 is fixed by the strengthening of the joint 8 provisionally in the intermediate positions before the following adjustment step, wherein the adjustment steps are getting smaller until the final position.

The protrusions 6 are arranged in a ring enclosing the image sensor 9, so that the lens holder 3 is attached in several attachment points to the back plate 2 enclosing the image sensor 9, which may be arranged preferably symmetrical to the optical axis of the lenses 5 and the center of the image sensor 9. If a further sealing is provided between the lens holder 3 and the back plate 2 it is possible to use a less expansive adhesive as a seal as the lens holder 3 is kept in position by the fused joint 8. Furthermore possible thermal drift has less influence since the lens holder 3 is kept by the protrusions 6 extending through the openings 7 in a positive locking connection. Furthermore the lens holder 3 is handled for the adjustment with a not shown gripper which may act vibrations on the lens holder 3 when gripping and releasing the lens holder 3, which has no or a reduced negative influence on the position of the lens holder 3 because of the suggested connection with the fused joint 8. If a soldering especially a tin soldering is used as a fused joint 8 well known production processes from the production of for example PCB's and the connector industry in general with standard equipment can be used. Furthermore additional sealings or adhesives may be applied between the connecting protrusions 6 before the adjustment and after the adjustment surrounding the protrusions 6.

In Figure 2 it is shown another embodiment in which the fused joint 10 is realized in a ring between the lens holder 3 and the back plate 2, wherein the ring encapsulates a cavity 11 between the lens holder 3 and the back plate 2 in which the image sensor 9 is arranged. The ring is surrounding the image sensor 9 and provides a connection between the lens holder 3 and the back plate 2 which acts also as a seal tightening the cavity 11 between the lens holder 3 and the back plate 2. The fused joint 10 may be designed here also as a metal soldering like tin soldering, wherein the tin or other melting metal may be applied as a tin plating zinc/metal or plated plastic. The adjustment is here performed by tilting or turning the lens holder 3 versus the back plate 2 with compressing the fused joint 10 in certain regions, so that the fused joint 10 may have in the final adjusted position of the lens holder 3 different thicknesses in circumferential direction when it is solidified.

Using tin soldering as a fused joint 8 or 10 is advantageous as the tin is solidifying very quickly, so that the lens holder 3 is fixed within a short time period after the alignment in the adjusted position, so that the production cycle may be shortened.

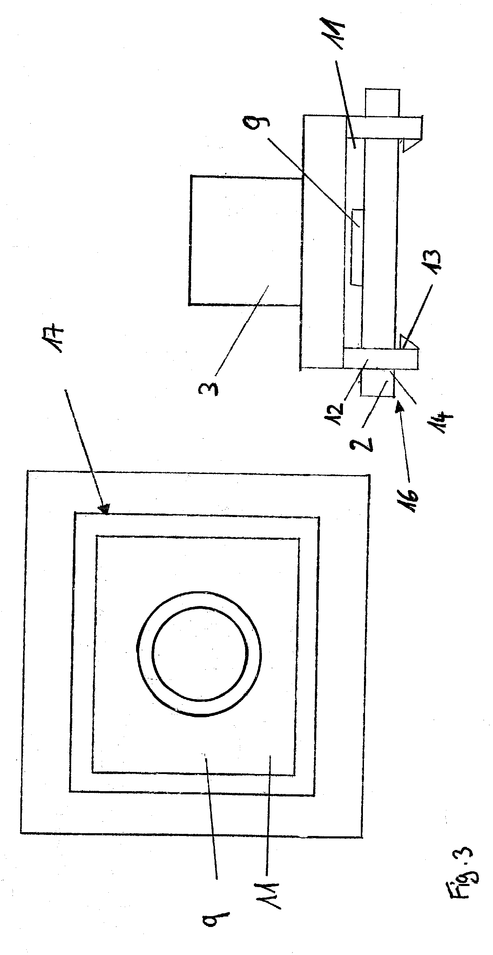

In Figure 3 it is shown another embodiment of the invention in which the lens holder 3 and the back plate 2 are connected with a provisional attachment 16 designed as a snap in connection. The snap in connection comprises arms 12 which comprises at their ends hocks 13 and are arranged at the lens holder 3. Furthermore there are provided openings 14 in the back plate 2 which comprise a corresponding cross-section so that the lens holder 3 may be inserted with the arms 12 and hooks 13 into the openings 14. The arms 12 are preferably resilient and are bended during the insertion outwardly and clips finally with the hooks 13 in the provisional attachment position. Furthermore there is provided a sealing 17 realized for example by foam or an elastomeric ring which tightens the cavity 11 between the lens holder 3 and the back plate 2. The sealing 17 may be realized also by a fused joint 10 like shown in Figure 2. Important is, that the sealing 17 tightens the cavity 11, which may be realized by designing the sealing 17 elastic or using a fluidic fused joint 10. The sealing 17 may therefore adapt its shape to the relative position of the lens holder 3 to the back plate 2. Furthermore the sealing 17 may compensate small irregularities in the surfaces. The camera module 1 is after the attachment of the provisional attachment 16 ready for a dustproofing and the adjustment of the lens holder 3.

The assembly process of the camera module 1 is performed by attaching the lens holder 3 at the back plate 2 in a cleanroom, so that the image sensor 9 is encapsulated afterwards by the sealing 17 in the cavity 11. The provisional attachment 16 prevents that both parts are separated and it may apply a certain pressure force on the elastic sealing 17, so that the cavity 11 is kept tightened. The camera module 1 can be taken then out of the cleanroom and the adjustments can be performed at another place outside the cleanroom. The time in the assembly process in which the camera module 1 need to be handled in the cleanroom may be therefore reduced as the image sensor 9 is kept in the tightened cavity 11 also outside of the cleanroom under the cleanroom conditions. The final adjustment process can be handled afterwards outside of the cleanroom with a suitable device which can be optimized regarding the costs and the handling time without taking into account special conditions of the environment.

## Claims

1. A camera module (1) for a motor vehicle, comprising a lens objective (4), a lens holder (3) holding said lens objective (4), and a back plate (2) connected to said lens holder (3) and holding an image sensor (9) in or close to an image plane (A) of the lens objective (4), **characterized in that** the lens holder (3) is fixed to the back plate (2) by a fused joint (8,10) or by an arrangement of several fused joints (8,10).

2. A camera module (1) as claimed in claim 1 **characterized in that** the lens holder (3) and the back plate (2) are connected by the fused joint(s) (8,10) in a section surrounding the image sensor (9).

3. A camera module (1) as claimed in claim 1, **characterized in that** the fused joint(s) (8,10) is (are) realized by a soldering, preferably by a tin soldering connection.

4. A camera module (1) as claimed in any one of the preceding claims, **characterized in that** the back plate (2) comprises at least one opening (7) and the lens holder (3) comprises at least one protrusion (6), wherein the protrusion (6) extends through the opening (7) and the fused joint(s) (8,10) is (are) realized by melting the protrusion(s) (6) with a thickened head (15) which comprises a dimension which is bigger than the cross section of the opening (7).

5. A camera module (1) as claimed in any one of the claims 1 to 3, **characterized in that** the fused joint (8,10) is realized by a ring of melted and afterwards solidified material which is arranged between the lens holder (3) and the back plate (2).

6. A camera module (1) as claimed in claim 5, **characterized in that** the ring is closed and encapsulates the image sensor (9).

7. Method for producing a camera module (1) for a motor vehicle, comprising a lens objective (4), a lens holder (3) holding said lens objective (4), and a back plate (2) connected to said lens holder (3) and holding an image sensor (9) in or close to an image plane (A) of the lens objective (4), with adjusting the lens holder (3) with detecting pre-defined images and comparing the detecting data with stored data in a processing unit, **characterized in that** the lens holder (3) is fixed in the adjusted position by a solidification of a fluidic fused joint (8,10).

8. Method as claimed in claim 7 **characterized in that** the fluidic fused joint (8,10) is applied before or in an early phase of the adjustment of the lens holder (3) and prefixes the lens holder (3) in relation to the back plate (2).

9. Method as claimed in one of the claims 7 or 8, **characterized in that** the lens holder (3) is adjusted while the fused joint (8,10) is solidifying.

10. Method for producing a camera module (1) for a motor vehicle, comprising a lens objective (4), a lens holder (3) holding said lens objective (4), and a back plate (2) connected to said lens holder (3) and holding an image sensor (9) in or close to an image plane (A) of the lens objective (4), with adjusting the lens holder (3) to the back plate (2) with detecting pre-defined images, comparing the detected data with stored data in a processing unit and adjusting the position of the lens holder (3) when the detected data differing from the stored data, **characterized in that** between the lens holder (3) and the back plate (2) is provided a sealing (17) and the lens holder (3) is prefixed in a cleanroom by a provisional attachment (16) to the back plate (2), and the adjustment of the lens holder (3) is performed outside the cleanroom.

11. Method as claimed in claim 10, **characterized in that** the provisional attachment (16) is a snap in connection.

12. Method as claimed in one of the claim 10 or 11, **characterized in that** the image sensor (9) is encapsulated by the sealing (17).

13. Method as claimed in one of the claims 10 to 12, **characterized in that** the sealing (17) is realized by an elastic ring.

14. Method as claimed in claim 13, **characterized in that** the elastic ring is compressed by the provisional attachment (16).

15. Method as claimed in one of the claims 10 to 14, **characterized in that** the sealing (17) is realized by a foam.
